# EUROPEAN PATENT SPECIFICATION

(11) **EP 3 059 731 B1**
(45) Date of publication and mention of the grant of the patent: **08.05.2019**
(21) Application number: 14794425.0
(22) Date of filing: 31.03.2014
(51) Int. Cl.: G10L 15/18, G10L 25/54, G06F 17/30, G10L 17/00

(54) **METHOD AND APPARATUS FOR AUTOMATICALLY SENDING MULTIMEDIA FILE, MOBILE TERMINAL, AND STORAGE MEDIUM**
VERFAHREN UND VORRICHTUNG ZUM AUTOMATISCHEN SENDEN VON MULTIMEDIADATEIEN, MOBILES ENDGERÄT UND SPEICHERMEDIUM
PROCÉDÉ ET APPAREIL D'ENVOI AUTOMATIQUE DE FICHIER MULTIMÉDIA, TERMINAL MOBILE, ET SUPPORT D'INFORMATIONS

(30) Priority: 14.10.2013 CN 201310478418
(43) Date of publication of application: 24.08.2016
(73) Proprietor: ZTE Corporation, Shenzhen, Guangdong 518057 (CN)
(72) Inventor: ZHANG, Weixin, Shenzhen Guangdong 518057 (CN)
(74) Representative: Lavoix
(86) International application number: PCT/CN2014/074478
(87) International publication number: WO 2014/180197

(56) References cited:
- EP-A1- 2 278 778
- CN-A- 1 457 011
- CN-A- 1 677 490
- CN-A- 101 256 658
- CN-A- 102 789 780
- CN-A- 102 982 800
- CN-A- 103 034 706
- CN-A- 103 165 131
- US-A- 6 122 614
- US-A1- 2012 045 093
- US-A1- 2012 316 873
- "Nokia 6300 User Guide - Issue 1.3", , 31 December 2007 (2007-12-31), pages 1-51, XP055191825, Retrieved from the Internet: URL:http://download-fds.webapps.microsoft. com/supportFiles/files/support/apac/phones /guides/Nokia_6300_APAC_UG_en.pdf [retrieved on 2015-05-28]
- VENAYAGAMOORTHY G K ET AL: "Voice recognition using neural networks", COMMUNICATIONS AND SIGNAL PROCESSING, 1998. COMSIG '98. PROCEEDINGS OF THE 1998 SOUTH AFRICAN SYMPOSIUM ON RONDEBOSCH, SOUTH AFRICA 7-8 SEPT. 1998, NEW YORK, NY, USA,IEEE, US, 7 September 1998 (1998-09-07), pages 29-32, XP010317164, DOI: 10.1109/COMSIG.1998.736916 ISBN: 978-0-7803-5054-0

## Description

### TECHNICAL FIELD

The disclosure relates to a multimedia file transmission technology, and in particular to a method and apparatus for automatically sending a multimedia file, a mobile terminal and a storage medium.

### BACKGROUND

With the popularisation of intelligent mobile terminals, the coming of a 3G/E3G era and the launching of various applications, the combination of mobile internet and cable internet is continuously accelerated, and the internet has trended towards various mobile terminals such as mobile phones and other mobile devices from desktop Personal Computers (PC). The mobile internet can meet requirements of users for conveniently enjoying internet service on the way between home and office, on a trip, at waiting time and at outdoor entertainment time, and bring great convenience to the work and life for people.

In the conventional art, when a multimedia file is sent via messaging or internet, it is necessary to add contact information of file receivers one by one. Here, the multimedia file may be a data file, an audio file or a video file. When there are more file receivers, a sending user needs to spend a lot of time searching and adding contacts, thereby influencing the using experience of the user and bringing inconvenience to the life of the user.

US 2012/0045093 A1 discloses a method and apparatus for recognizing objects in media contents.

EP 2278778 A1 discloses a mobile terminal and controlling method thereof.

"Nokia 6300 User Guide - Issue 1.3" discloses information about multimedia messages, and incoming MMS msgs allows the reception of multimedia messages automatically, manually after being prompted or rejects the reception.

"VOICE RECOGNITION USING NEURAL NETWORKS" discloses one solution to the crime and illegal immigration problem facing south Africa is the use of biometrics techniques and technology.

### SUMMARY

The subject-matter of the present invention is achieved by the appended claims.

In view of this, the embodiments of the disclosure provide a method and apparatus for automatically sending a multimedia file, a mobile terminal and a storage medium, which can achieve automatic sending of the multimedia file, save the time of a user and improve the using experience of the user.

To this end, the technical solutions of the disclosure are implemented as follows.

An embodiment of the disclosure provides a method for automatically sending a multimedia file, which may include that:
a voice feature of each object in the multimedia file is obtained; a match is searched for between the obtained voice feature of each object and a voice feature of each contact in a voice parameter database; and when a match is found, the multimedia file is automatically sent to a matching contact;
wherein obtaining the voice feature of each object in the multimedia file comprises:
   dividing the input multimedia file into segments in a time domain, and converting a time domain signal corresponding to a voice in each segment of file into a respective frequency domain signal;
   obtaining a corresponding voice feature from the obtained frequency domain signal of the voice;
   identifying the obtained voice feature of each object by an index, filtering contents with the same Index, retaining and storing a unique Index for each voice feature such that each feature corresponds to a unique contact in the voice parameter database; and
   upon completion of a voice feature analysis, outputting a sequence array formed by indexes to voice features.

In an embodiment, the method may further include that: before the voice feature of each object in the multimedia file is obtained, it is pre-set whether a functional mode of automatically sending the multimedia file is activated.

In an embodiment, the step that the voice feature of each object in the multimedia file is obtained may include that: a voice signal of the multimedia file is extracted and analysed, and the analysed voice signal is converted into a frequency domain signal.

In an embodiment, when there are multiple matching contacts, the method may further include that: a contact from the multiple matching contacts to receive the multimedia file is selected, and the multimedia file is sent to the selected contact.

In an embodiment, the step that the multimedia file is automatically sent to the matching contact may include that: when a data service of a mobile terminal is activated, the multimedia file is automatically sent to the matching contact in a data service manner; and when the data service of the mobile terminal is not activated, the multimedia file is automatically sent to the matching contact in an messaging manner.

An embodiment of the disclosure provides an apparatus for automatically sending a multimedia file, which may include: a voice processing module, a voice parameter database, a voice parameter matching module and a sending module, wherein
the voice processing module is configured to obtain a voice feature of each object in the multimedia file;
the voice parameter database is configured to store voice features of contacts;
the voice parameter matching module is configured to search for a match between the voice feature of each object in the multimedia file and the voice feature of each contact in the voice parameter database; and
the sending module is configured to automatically send the multimedia file to a matching contact when a match is found;
wherein the voice processing module is specifically configured to:
divide the input multimedia file into segments in a time domain, and convert a time domain signal corresponding to a voice in each segment of file into a respective frequency domain signal;
obtain a corresponding voice feature from the obtained frequency domain signal of the voice; and
identify the obtained voice feature of each object by an index, filter contents with the same Index, retain and storing a unique Index for each voice feature such that each feature corresponds to a unique contact in the voice parameter database; and
upon completion of a voice feature analysis, output a sequence array formed by indexes to voice features.

In an embodiment, the apparatus may further include: a setting module, configured to pre-set whether a functional mode of automatically sending the multimedia file is activated.

In an embodiment, the apparatus may further include: a selection module, configured to, when there are multiple matching contacts, select a contact from the multiple matching contacts to receive the multimedia file and trigger the sending module.

An embodiment of the disclosure also provides a mobile terminal, which may include any above-mentioned apparatus for automatically sending a multimedia file.

An embodiment of the disclosure also provides a computer storage medium. Computer-readable storage programs are recorded in the computer storage medium, which comprises code means adapted to perform all the steps of the method according to the embodiment of the disclosure when said program is run on a computer.

By means of the method and apparatus for automatically sending a multimedia file, the mobile terminal and the storage medium, provided by the embodiments of the disclosure, the voice feature of each object in the multimedia file is obtained; a match is searched for between the obtained voice feature of each object and the voice feature of each contact in the voice parameter database; and when a match is found, the multimedia file is automatically sent to all matching contacts. The embodiments of the disclosure can achieve automatic sending of the multimedia file, save the time of a user, reduce the communication cost of the user, improve the using experience of the user and bring convenience to the life of the user.

### BRIEF DESCRIPTION OF THE DRAWINGS

Fig. 1 is a basic processing flowchart of a method for automatically sending a multimedia file according to an embodiment of the disclosure;
Fig. 2 is a specific implementation flowchart of a method for automatically sending a multimedia file according to an embodiment of the disclosure;
Fig. 3 is a specific implementation flowchart of obtaining of a voice feature of each object in a multimedia file via a mobile terminal according to an embodiment of the disclosure; and
Fig. 4 is a composition structure diagram of an apparatus for automatically sending a multimedia file according to an embodiment of the disclosure.

### DETAILED DESCRIPTION

Computer voice recognition is a mode recognition matching process. In this process, firstly, it is necessary for a computer to establish a voice model according to a voice feature of an obtained object, to analyse an input voice signal, to extract required characteristics, and to establish a template required for voice recognition on this basis. And the computer compares a voice template stored in the computer with characteristics of the input voice signal according to an overall voice recognition model in the recognition process and finds a series of optimal templates matching an input voice according to a certain searching and matching policy. Then, a recognition result of the computer can be obtained by table look-up according to definitions of found template numbers.

By utilizing characteristics/features of the voice recognition, in various embodiments of the disclosure, a voice feature of each object in a multimedia file is obtained; a match is searched for between the voice feature of each object and a voice feature of each contact in a voice parameter database; and when a match is found, the multimedia file is automatically sent to a matching contact.

Here, objects are in one-to-one correspondence to contacts, and one or more contacts may be probably involved in a multimedia file. When one object is involved, a match is searched for between the voice feature of the object and the voice feature of each contact in the voice parameter database. And when a match is found, the multimedia file is automatically sent to the matching contact. When multiple objects are involved, a match is searched for between the voice feature of each object and the voice feature of each contact in the voice parameter database. After a match is found, corresponding matching contacts are recorded, and after the match searching with respect to multiple contacts is completed, as long as matches are found, the multimedia file is automatically sent to the matching contact In this situation, the multimedia file can be sent to all of the matching contacts or selectively sent to part of the matching contacts.

Specifically, when a user needs to send a multimedia file, a mobile terminal obtains the voice feature of each object in the multimedia file to be sent, including: extracting and analysing a voice signal of the multimedia file in a time domain, and outputting the analysed voice signal in a frequency form. The voice signal is converted from the time domain to a frequency domain, to further obtain the voice feature of each object involved in the multimedia file to be sent.

Herein, the voice features includes energy, amplitude, a zero-crossing rate, a frequency spectrum, a cepstrum, a power spectrum and the like, and a voice recognition parameter includes a Linear Prediction Coefficient (LPC), a Linear Prediction Cepstrum Coefficient (LPCC), a Mel Frequency Cepstrum Coefficient (MFCC) and the like.

In practical applications, when a data service state of a mobile terminal is activated, the multimedia file is automatically sent to the matching contact in a data service manner. And when the data service state of the mobile terminal is not activated, the multimedia file is automatically sent to the matching contact in an messaging manner such as multimedia message service.

Here, the voice feature of each object corresponds to a unique contact, and the voice feature of each contact in the voice parameter database can be pre-stored, retained in a voice call, extracted from an existing multimedia file, or be obtained in other modes capable of obtaining the voice feature and saved.

Furthermore, it can be pre-set whether a functional mode of automatically sending the multimedia file is activated. A function of automatically sending the multimedia file is activated as needed. If the function of automatically sending the multimedia file is activated, a match is searched for between the obtained voice feature of each object in the multimedia file and the voice feature of each contact in the voice parameter database, and the multimedia file is automatically sent to a matching contact.

It is important to note that the mobile terminal in the embodiment of the disclosure is not limited to a smart phone and a Personal Digital Assistant (PDA), and all mobile terminals having file storage and communication functions can be applied to a method for automatically sending a multimedia file according to the embodiment of the disclosure, and shall fall within a range of mobile terminals to be protected by the embodiment of the disclosure.

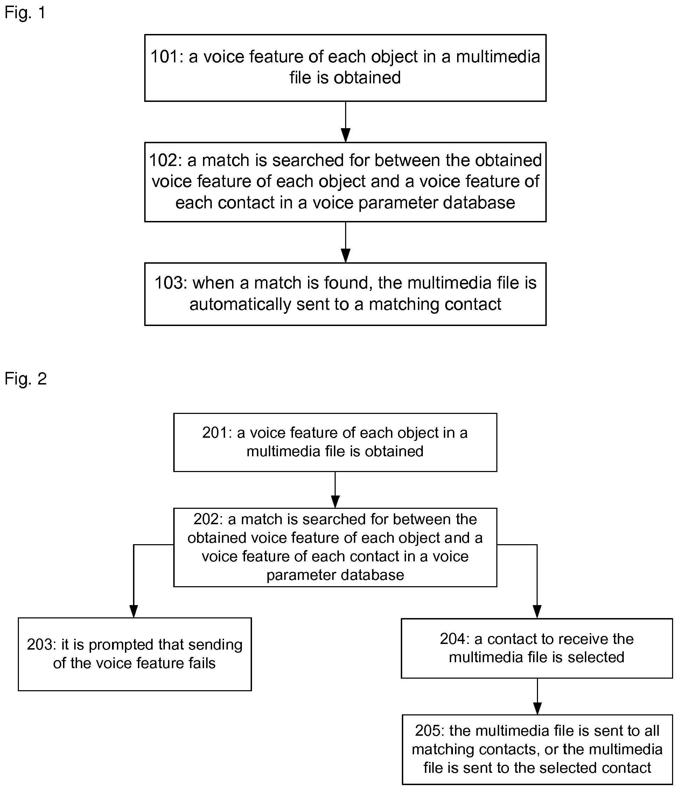

As shown in Fig. 1, a basic processing flow of a method for automatically sending a multimedia file according to an embodiment of the disclosure includes the steps as follows.

Step 101: a voice feature of each object in a multimedia file is obtained.

Here, the step that a mobile terminal obtains the voice feature of each object in the multimedia file includes that: a voice signal of the multimedia file is extracted and analysed, the analysed voice signal is output in a frequency form, and the voice feature of each person involved in the multimedia file is further obtained.

Step 102: a match is search for between the obtained voice feature of each object and a voice feature of each contact in a voice parameter database.

Here, there is a unique match between the voice feature of each object and the voice feature of a contact in the voice parameter database uniquely; and moreover, the voice feature of each contact in the voice parameter database is pre-stored, can be obtained from an audio file of an ordinary communication, can be obtained from an existing audio file, or can be obtained in other modes capable of obtaining the voice feature and saved.

When multiple objects are involved, a match is searched for between the voice feature of each of the multiple objects and voice features of contacts in the voice parameter database.

Step 103: When a match is found, the multimedia file is automatically sent to a matching contact.

Here, when there are multiple matching contacts, the multimedia file can be sent to all matching contacts, or a contact needing to receive the multimedia file can be selected, and the multimedia file is sent to the selected contact.

Specifically, when a data service state of a mobile terminal is activated, the multimedia file will be automatically sent to the contact needing to receive the multimedia file in a data service manner such as Wechat, QQ and Email; and
when the data service state of the mobile terminal is not activated or the mobile terminal is not in the data service state, the multimedia file is automatically sent to the contact needing to receive the multimedia file in a Packet Switch (PS) domain messaging manner such as short messaging and multimedia message service.

In the process, prior to Step 101, the method further includes that: before the mobile terminal obtains the voice feature of each person in the multimedia file, it is pre-set whether a functional mode of automatically sending the multimedia file is activated.

Specifically, when a function of automatically sending the multimedia file is activated as needed. If the function of automatically sending the multimedia file is activated, automatic sending of the multimedia file can be achieved when a file is selectively sent.

The technical solutions of the embodiments of the disclosure are further described in detail below with reference to the drawings and specific embodiments.

As shown in Fig. 2, a specific implementation flow of a method for automatically sending a multimedia file according to an embodiment of the disclosure includes the steps as follows.

Step 201: A voice feature of each object in a multimedia file is obtained.

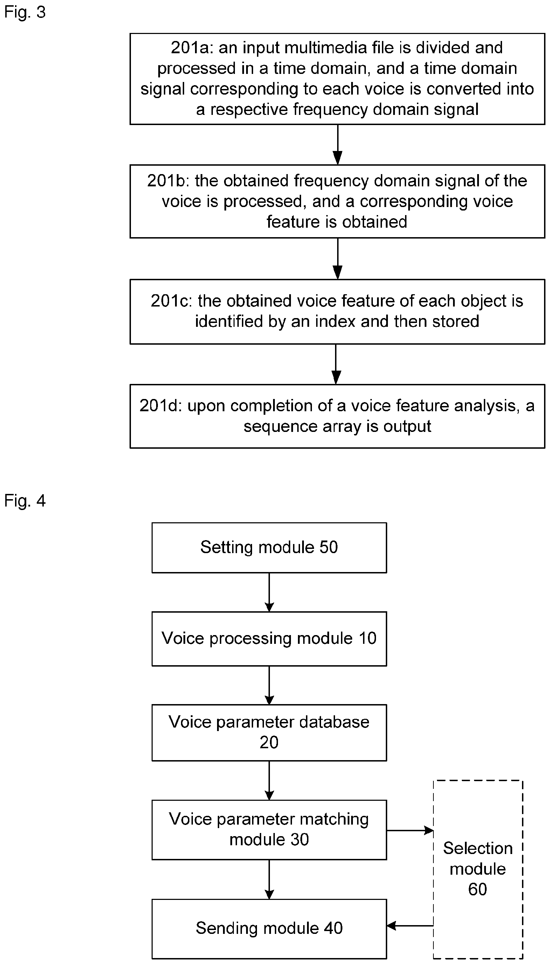

As shown in Fig. 3, a specific implementation flow of obtaining of a voice feature of each object in a multimedia file according to an embodiment of the disclosure includes the steps as follows.

Step 201a: An input multimedia file is divided into segments in a time domain, and a time domain signal corresponding to a voice in each segment of file is converted into a respective frequency domain signal.

Here, the input multimedia file can be divided into N segments according to the time domain, wherein an interval between every two segments can be set as 0.5s, 1s or the like as needed. A voice signal of the multimedia file is pre-processed according to a traditional acoustic characteristic extraction method involving a frequency domain, wherein pre-processing includes pre-emphasis on the voice signal, and a high-quality voice frequency spectrum is further obtained. A commonly captured voice signal frequency is located between 1.5kHz and 1.6kHz; and moreover, the voice is captured according to the time domain in the situation that each voice has only one object, if two or more objects occur in the same voice simultaneously, it is difficult to distinguish different objects, and voice signals cannot be captured to be compared.

Step 201b: A corresponding voice feature is obtained from the obtained frequency domain signal of the voice.

Specifically, the obtained voice feature includes energy, amplitude, a zero-crossing rate, a frequency spectrum, a cepstrum, a power spectrum and the like, and a corresponding voice recognition parameter such as an LPC, an LPCC and an MFCC is obtained using the obtained voice feature.

Here, the voice feature extraction method is the conventional art, detailed descriptions are not needed, and all conventional voice feature extraction methods are applicable to the embodiments of the disclosure.

Step 201c: the obtained voice feature of each object identified by an index and then stored.

The obtained voice feature of each object is identified by an index as: Index1 (voice feature 1), Index2 (voice feature 2), Index3 (voice feature 3) and the like, contents with the same Index are filtered, and a unique Index is retained and stored to ensure that each feature corresponds to a unique contact in a voice parameter database.

Here, voices in all segments of multimedia file divided in Step 201a correspond to different or identical objects respectively, and the voice feature of each object can be obtained after each segment of multimedia file is processed.

Step 201d: upon completion of a voice feature analysis, a sequence array formed by indexes and identifiers is output.

Here, the output sequence array is: Index1 (voice feature 1), Index2 (voice feature 2), Index3 (voice feature 3) and the like.

Step 202 to Step 203: a match is searched for between the obtained voice feature of each object and a voice feature of each contact in the voice parameter database.

Here, there is a unique match between the obtained voice feature of each object and the voice feature of each contact in the voice parameter database uniquely; and moreover, the voice feature of each contact in the voice parameter database is pre-stored, can be retained in a voice call, can be extracted from an existing multimedia file, or can be obtained in other modes capable of obtaining the voice feature and saved.

When no match is found between the voice feature of each object in the multimedia file and the voice feature of each contact in the voice parameter database fails, Step 203 is executed, it is prompted that sending of the voice feature fails, and a current flow is ended.

When one matching contact is found, Step 205 is directly executed. When multiple matching contacts are found, it is prompted that a contact needing to receive the multimedia file is required to be selected, and Step 204 is executed.

Step 204: a contact to receive the multimedia file is selected.

Here, if there is no selection, all matching contacts can be selected by default.

Step 205: The multimedia file is sent to all the matching contacts, or the multimedia file is sent to the selected contact.

Specifically, when a mobile terminal activates a data service state, the multimedia file will be automatically sent to the contact needing to receive the multimedia file in a data service manner such as Wechat, QQ and Email; and when the data service state of the mobile terminal is not activated or the mobile terminal is not in the data service state, the multimedia file is sent to the matching contact in a PS domain messaging manner such as short messaging and multimedia message service.

Here, prior to Step 201, the method further includes that: before the mobile terminal obtains the voice feature of each object in the multimedia file, it is pre-set whether a functional mode of automatically sending the multimedia file is activated.

In order to implement the method for automatically sending a multimedia file, an embodiment of the disclosure also provides an apparatus for automatically sending a multimedia file. The apparatus for automatically sending a multimedia file is arranged in a mobile terminal and belongs to newly added functional modules of the mobile terminal. Fig. 4 shows a composition structure of the apparatus for automatically sending a multimedia file. The apparatus includes: a voice processing module 10, a voice parameter database 20, a voice parameter matching module 30 and a sending module 40, wherein
the voice processing module 10 is configured to obtain a voice feature of each object in the multimedia file;
the voice parameter database 20 is configured to store voice features of contacts;
the voice parameter matching module 30 is configured to search for a match betweem the voice feature of each object in the multimedia file and the voice feature of each contact in the voice parameter database; and
the sending module 40 is configured to send the multimedia file to a matching contact.

Here, the matching contact can be all matching contacts or can be some selected matching contacts.

The apparatus may further include: a setting module 50, configured to pre-set whether a functional mode of automatically sending the multimedia file is activated.

Here, the set functional mode of automatically sending the multimedia file is activated as needed.

The apparatus may further include: a selection module 60, configured to select a contact needing to receive the multimedia file and trigger the sending module when there are multiple matching contacts.

Correspondingly, the voice parameter matching module 30 prompts a result of the match searching made between the voice feature of each object in the multimedia file and the voice feature of each contact in the voice parameter database.

Furthermore, an embodiment of the disclosure also provides a mobile terminal, which includes the apparatus for automatically sending a multimedia file.

The voice parameter database in the apparatus for automatically sending a multimedia file, proposed in the embodiment of the disclosure, can be implemented via a storage device such as a hard disk. The voice processing module, the database, the voice parameter matching module, the sending module, the setting module and the selection module can be implemented via a processor, and can be implemented via a specific logical circuit certainly. The processor may be a processor for a mobile terminal or a server. In practical application, the processor may be a Central Processing Unit (CPU), a Micro Processor Unit (MPU), a Digital Signal Processor (DSP) or a Field-Programmable Gate Array (FPGA).

In the embodiments of the disclosure, if the method for automatically sending a multimedia file is implemented in a form of a software function module used as an independent product, the product can also be stored in a computer readable storage medium. The storage medium includes: various media capable of storing program codes, such as a U disk, a mobile hard disk, a Read Only Memory (ROM), a disk or an optical disc. Thus, the embodiments of the disclosure are not limited to combination of any specific hardware and software.

Correspondingly, an embodiment of the disclosure also provides a computer storage medium. Computer programs are stored in the computer storage medium and are used for executing the method for automatically sending a multimedia file according to the embodiment of the disclosure.

The above is only the preferred embodiments of the disclosure and is not intended to limit the protection scope of the disclosure.

## Claims

1. A method for automatically sending a multimedia file, the method comprising:
activating, a function of automatically sending the multimedia file;
obtaining (101) a voice feature of each object in the multimedia file;
wherein obtaining (101) the voice feature of each object in the multimedia file comprises:
dividing the multimedia file into segments in a time domain, and converting a time domain signal corresponding to a voice in each segment of the multimedia file into a respective frequency domain signal;
obtaining a corresponding voice feature from the frequency domain signal of the voice;
identifying the obtained voice feature of each object by an index and storing the voice feature identified by the index; and
upon completion of a voice feature analysis, outputting a sequence array formed by indexes of voice features of all objects;
searching (102) for a match between the obtained voice feature of each object in the multimedia file and a voice feature of each contact in a voice parameter database; and
when a match is found, automatically sending (103) the multimedia file to a matching contact in a data service manner when a data service of a mobile terminal is activated; or automatically sending the multimedia file to the matching contact in a messaging manner when a data service of a mobile terminal is not activated.

2. The method for automatically sending a multimedia file according to claim 1, wherein obtaining the voice feature of each object in the multimedia file comprises:
extracting and analysing a voice signal of the multimedia file, and converting the analysed voice signal into a frequency domain signal.

3. The method for automatically sending a multimedia file according to claim 1 or 2, wherein when there are multiple matching contacts, the method further comprises: selecting a contact from the multiple matching contacts to receive the multimedia file, and sending the multimedia file to the selected contact.

4. An apparatus for automatically sending a multimedia file, the apparatus comprising: a setting module (50), a voice processing module (10), a voice parameter database (20), a voice parameter matching module (30) and a sending module (40), wherein
the setting module (50) is configured to activate a function of automatically sending the multimedia file;
the voice processing module (10) is configured to:
divide the multimedia file into segments in a time domain, and convert a time domain signal corresponding to a voice in each segment of the multimedia file into a respective frequency domain signal;
obtain a corresponding voice feature from the frequency domain signal of the voice;
identify the obtained voice feature of each object by an index and store the voice feature identified by the index; and
upon completion of a voice feature analysis, output a sequence array formed by indexes of voice features of all objects;
the voice parameter database (20) is configured to store voice features of contacts;
the voice parameter matching module (30) is configured to search for a match between the voice feature of each object in the multimedia file and a voice feature of each contact in the voice parameter database; and
the sending module (40) is configured to automatically send, when a match is found, the multimedia file to a matching contact in a data service manner when a data service of a mobile terminal is activated; or in a messaging manner when a data service of a mobile terminal is not activated.

5. The apparatus for automatically sending a multimedia file according to claim 4, further comprising:
a selection module (60), configured to, when there are multiple matching contacts, select a contact from the multiple matching contacts to receive the multimedia file and trigger the sending module.

6. A mobile terminal, comprising an apparatus for automatically sending a multimedia file according to claim 4 or claim 5.

7. A computer storage medium having recorded thereon a computer-readable storage program comprising code means adapted to perform all the steps of the method of claims 1 to 3 when said program is run on a computer.

## Patentansprüche

1. Verfahren zum automatischen Senden einer Multimedia-Datei, wobei das Verfahren umfasst:
Aktivieren einer Funktion zum automatischen Senden der Multimedia-Datei;
Erhalten (101) eines Sprachmerkmals jedes Objekts in der Multimedia-Datei;
wobei das Erhalten (101) des Sprachmerkmals jedes Objekts in der Multimedia-Datei umfasst:
Teilen der Multimedia-Datei in Segmente in einer Zeitdomäne und Umsetzen eines Zeitdomänensignals, das einer Sprache in jedem Segment der Multimedia-Datei entspricht, in ein jeweiliges Frequenzdomänensignal;
Erhalten eines entsprechenden Sprachmerkmals aus dem Frequenzdomänensignal der Sprache;
Identifizieren des erhaltenen Sprachmerkmals jedes Objekts durch einen Index und Speichern des durch den Index identifizierten Sprachmerkmals; und
Ausgeben einer Sequenzanordnung, die durch Indizes von Sprachmerkmalen aller Objekte gebildet wird, bei Abschluss einer Sprachmerkmalsanalyse;
Suchen (102) nach einer Übereinstimmung zwischen dem erhaltenen Sprachmerkmal jedes Objekts in der Multimedia-Datei und einem Sprachmerkmal jedes Kontakts in einer Sprachparameter-Datenbank; und
wenn eine Übereinstimmung gefunden wird, automatisches Senden (103) der Multimedia-Datei an einen übereinstimmenden Kontakt in Form eines Datendienstes, wenn ein Datendienst eines mobilen Endgeräts aktiviert ist, oder automatisches Senden der Multimedia-Datei an den übereinstimmenden Kontakt in Form einer Nachrichtenübermittlung, wenn ein Datendienst eines mobilen Endgeräts nicht aktiviert ist.

2. Verfahren zum automatischen Senden einer Multimedia-Datei nach Anspruch 1, wobei das Erhalten des Sprachmerkmals jedes Objekts in der Multimedia-Datei umfasst:
Extrahieren und Analysieren eines Sprachsignals der Multimedia-Datei und Umsetzen des analysierten Sprachsignals in ein Frequenzdomänensignal.

3. Verfahren zum automatischen Senden einer Multimedia-Datei nach Anspruch 1 oder 2, wobei das Verfahren, wenn es mehrere übereinstimmende Kontakte gibt, ferner umfasst:
Auswählen eines Kontakts aus den mehreren übereinstimmenden Kontakten zum Empfangen der Multimedia-Datei und Senden der Multimedia-Datei an den ausgewählten Kontakt.

4. Vorrichtung zum automatischen Senden einer Multimedia-Datei, wobei die Vorrichtung umfasst: ein Einstellmodul (50), ein Sprachverarbeitungsmodul (10), eine Sprachparameter-Datenbank (20), ein Sprachparametervergleichsmodul (30) und ein Sendemodul (40), wobei
das Einstellmodul (50) zum Aktivieren einer Funktion zum automatischen Senden der Multimedia-Datei konfiguriert ist;
das Sprachverarbeitungsmodul (10) konfiguriert ist zum:
Teilen der Multimedia-Datei in Segmente in einer Zeitdomäne und Umsetzen eines Zeitdomänensignals, das einer Sprache in jedem Segment der Multimedia-Datei entspricht, in ein jeweiliges Frequenzdomänensignal;
Erhalten eines entsprechenden Sprachmerkmals aus dem Frequenzdomänensignal der Sprache;
Identifizieren des erhaltenen Sprachmerkmals jedes Objekts durch einen Index und Speichern des durch den Index identifizierten Sprachmerkmals; und
Ausgeben einer Sequenzanordnung, die durch Indizes von Sprachmerkmalen aller Objekte gebildet wird, bei Abschluss einer Sprachmerkmalsanalyse;
die Sprachparameter-Datenbank (20) zum Speichern von Sprachmerkmalen von Kontakten konfiguriert ist;
das Sprachmerkmalsvergleichsmodul (30) zum Suchen nach einer Übereinstimmung zwischen dem Sprachmerkmal jedes Objekts in der Multimedia-Datei und einem Sprachmerkmal jedes Kontakts in der Sprachparameter-Datenbank konfiguriert ist; und
das Sendemodul (40) so konfiguriert ist, dass es, wenn ein Datendienst eines mobilen Endgeräts aktiviert ist, die Multimedia-Datei in Form eines Datendienstes oder, wenn ein Datendienst eines mobilen Endgeräts nicht aktiviert ist, in Form einer Nachrichtenübermittlung automatisch an einen übereinstimmenden Kontakt sendet, wenn eine Übereinstimmung gefunden wird.

5. Vorrichtung zum automatischen Senden einer Multimedia-Datei nach Anspruch 4, ferner umfassend:
ein Auswahlmodul (60), das so konfiguriert ist, dass es, wenn es mehrere übereinstimmende Kontakte gibt, einen Kontakt aus den mehreren übereinstimmenden Kontakten zum Empfangen der Multimedia-Datei auswählt und das Sendemodul auslöst.

6. Mobiles Endgerät, umfassend eine Vorrichtung zum automatischen Senden einer Multimedia-Datei nach Anspruch 4 oder 5.

7. Computerspeichermedium mit einem darauf aufgezeichneten computerlesbaren Speicherprogramm, das Codemittel umfasst, die so ausgelegt sind, dass sie alle Schritte des Verfahrens nach Anspruch 1 bis 3 ausführen, wenn das Programm auf einem Computer ausgeführt wird.

## Revendications

1. Procédé d'envoi automatique d'un fichier multimédia, le procédé comprenant les étapes ci-dessous consistant à :
activer une fonction d'envoi automatique du fichier multimédia ;
obtenir (101) une caractéristique vocale pour chaque objet dans le fichier multimédia ;
dans lequel l'étape d'obtention (101) de la caractéristique vocale de chaque objet dans le fichier multimédia comprend les étapes ci-dessous consistant à :
diviser le fichier multimédia en segments dans un domaine temporel, et convertir un signal de domaine temporel correspondant à une voix dans chaque segment du fichier multimédia en un signal de domaine fréquentiel respectif ;
obtenir une caractéristique vocale correspondante à partir du signal de domaine fréquentiel de la voix ;
identifier la caractéristique vocale obtenue de chaque objet, par un index, et stocker la caractéristique vocale identifiée par l'index ; et
à l'issue d'une analyse de caractéristiques vocales, fournir en sortie une matrice de séquences formée par des index des caractéristiques vocales de tous les objets ;
rechercher (102) une correspondance entre la caractéristique vocale obtenue de chaque objet dans le fichier multimédia et une caractéristique vocale de chaque contact dans une base de données de paramètres vocaux ; et
lorsqu'une correspondance est trouvée, envoyer automatiquement (103) le fichier multimédia à un contact correspondant, par service de données, lorsqu'un service de données d'un terminal mobile est activé ; ou envoyer automatiquement le fichier multimédia au contact correspondant, par messagerie, lorsque le service de données d'un terminal mobile n'est pas activé.

2. Procédé d'envoi automatique d'un fichier multimédia selon la revendication 1, dans lequel l'étape d'obtention de la caractéristique vocale de chaque objet dans le fichier multimédia comprend l'étape ci-dessous consistant à :
extraire et analyser un signal vocal du fichier multimédia, et convertir le signal vocal analysé en un signal de domaine fréquentiel.

3. Procédé d'envoi automatique d'un fichier multimédia selon la revendication 1 ou 2, dans lequel, lorsqu'il existe de multiples contacts correspondants, le procédé comprend en outre les étapes consistant à :
sélectionner un contact parmi les multiples contacts correspondants pour recevoir le fichier multimédia, et envoyer le fichier multimédia au contact sélectionné.

4. Appareil destiné à envoyer automatiquement un fichier multimédia, l'appareil comprenant : un module de réglage (50), un module de traitement vocal (10), une base de données de paramètres vocaux (20), un module de correspondance de paramètres vocaux (30) et un module d'envoi (40), dans lequel
le module de réglage (50) est configuré de manière à activer une fonction d'envoi automatique du fichier multimédia ;
le module de traitement vocal (10) est configuré de manière à :
diviser le fichier multimédia en segments dans un domaine temporel, et convertir un signal de domaine temporel correspondant à une voix dans chaque segment du fichier multimédia en un signal de domaine fréquentiel respectif ;
obtenir une caractéristique vocale correspondante à partir du signal de domaine fréquentiel de la voix ;
identifier la caractéristique vocale obtenue de chaque objet, par un index, et stocker la caractéristique vocale identifiée par l'index ; et
à l'issue d'une analyse de caractéristiques vocales, fournir en sortie une matrice de séquences formée par des index de caractéristiques vocales de tous les objets ;
la base de données de paramètres vocaux (20) est configurée de manière à stocker des caractéristiques vocales de contacts ;
le module de correspondance de paramètres vocaux (30) est configuré de manière à rechercher une correspondance entre la caractéristique vocale de chaque objet dans le fichier multimédia et une caractéristique vocale de chaque contact dans la base de données de paramètres vocaux ; et
le module d'envoi (40) est configuré de manière à envoyer automatiquement, lorsqu'une correspondance est trouvée, le fichier multimédia, à un contact correspondant, par service de données, lorsqu'un service de données d'un terminal mobile est activé ; ou par messagerie, lorsque le service de données d'un terminal mobile n'est pas activé.

5. Appareil destiné à envoyer automatiquement un fichier multimédia selon la revendication 4, comprenant en outre :
un module de sélection (60), configuré de manière à, lorsqu'il existe de multiples contacts correspondants, sélectionner un contact parmi les multiples contacts correspondants en vue de recevoir le fichier multimédia, et déclencher le module d'envoi.

6. Terminal mobile, comprenant un appareil destiné à envoyer automatiquement un fichier multimédia selon la revendication 4 ou 5.

7. Support de stockage informatique sur lequel est enregistré un programme de stockage lisible par ordinateur comprenant des moyens de code aptes à mettre en oeuvre toutes les étapes du procédé selon l'une quelconque des revendications 1 à 3, lorsque ledit programme est exécuté sur un ordinateur.
